# EUROPEAN PATENT APPLICATION

(11) **EP 2 259 466 A2**
(43) Date of publication of application: **08.12.2010**
(21) Application number: 10005749.6
(22) Date of filing: 02.06.2010
(51) Int. Cl.: H04L 1/00

(54) **Radio communication system, base station and mobile station**

(30) Priority: 05.06.2009 JP 2009135689
(71) Applicant: Hitachi, Ltd., Chiyoda-ku Tokyo 100-8280 (JP)
(72) Inventor: Katayama, Rintaro, Tokyo 100-8220 (JP); Tamaki, Satoshi, Tokyo 100-8220 (JP); Yamamoto, Tomonori, Tokyo 100-8220 (JP); Ishii, Hirotake, Tokyo 100-8220 (JP)
(74) Representative: Strehl Schübel-Hopf & Partner

(57) **Abstract**

In a radio-communication system, when wanting to perform high-accuracy scheduling in a base station (101), a large number of information items, such as channel quality information, desired precoding matrix information and so on, are fed back from a mobile station (102) with a high degree of accuracy. The base station (101) monitors the feedback information and, upon acquisition of it, transmits to the mobile station (102) a certain kind of feedback information which is judged to contribute to scheduling accuracy improvement while preventing the other kinds of feedback information from being sent to the mobile station (102).

## Description

### BACKGROUND OF THE INVENTION

The present invention relates to a wireless communication system using cellular communication realization technologies, a base station and a terminal device, known as mobile station.

In cellular communications, scheduling is performed for selecting a time slot, frequency slot, modulation scheme, coding rate and others, which are used for radio-communication with a terminal device, called the mobile station. When performing the scheduling in a base station, the base station performs this scheduling using information on radio channel quality of each mobile station or the like. For example, in cases where the scheduling is performed for data transmission over a downlink, which is from the base station toward the mobile station, the radio channel quality of the downlink used for the scheduling is measured by the mobile station, for example, and is then fed back to the base station. In this way, the base station performs, in some cases, the scheduling based on the feedback information acquired from the mobile station.

In a standard-setting organization named the 3rd Generation Partnership Project (3GPP), wireless interfaces for realizing cellular radiocommunication systems are standardized as the Evolved Universal Terrestrial Radio Access (E-UTRA). In a nonpatent document titled "3GPP TS 36.213 V8.6.0 (2009-03)," Section 7.2 "UE procedure for reporting channel quality indication (CQI), precoding matrix indicator (PMI) and rank indication (RI)," radio channel quality information called the channel quality indication (CQI) and its feedback scheme are prescribed. Additionally in the E-UTRA, a downlink transmission technique is under consideration, wherein this technique is for performing precoding which permits a base station to apply, in advance, matrix multiplication to a transmission signal(s) by use of a precoding matrix that was selected by a mobile station from a predefined codebook. In Section 6.3.4 "Precoding" of another document tilted "3GPP TS 36.211 V8.6.0 (2009-03)," there is defined a codebook which becomes a candidate for precoding information to be selected by the mobile station. In the "3GPP TS 36.213 V8.6.0" document, there are defined precoding matrix information called the precoding matrix indicator (PMI) which is selected by a mobile station from the codebook and a feedback scheme thereof.

### SUMMARY OF THE INVENTION

The base station acquires from a mobile station one or a plurality of kinds of feedback information, such as CQI and/or PMI, and performs the scheduling. However, an overhead occurring due to transmission of such feedback information from the mobile station to the base station can pose the risk of a decrease in throughput of uplink.

Especially, in order to increase the accuracy of the scheduling aimed at improvement in downlink throughput, it is desirable that an increased number of kinds of feedback information items be acquired with a higher degree of accuracy. Unfortunately, an increase in feedback information amount leads to an increase in overhead occurring due to the uplink's control information being passed from the mobile station to the base station, resulting in unwanted decreases in uplink throughputs.

In order to solve at least one of the above-stated problems, in accordance with one preferred form of this invention, the base station is arranged to select feedback information as acquired from a communication terminal called the mobile station in a way pursuant to a present state of the mobile station. For example, the base station monitors or "watchdogs" a present situation of the mobile station by means of feedback information or the like, and determines whether there is a need for acquiring a certain kind of feedback information. Regarding the feedback information which is needed to be acquired, the base station instructs the mobile station to transmit this information; as for the other feedback information which is not needed to be obtained, the base station instructs the mobile station not to send such information.

According to the one form of this invention, the acquisition-unnecessary feedback information is prevented from being sent from the mobile station while putting no restraints on the feedback information amount. Thus, it becomes possible to avoid or at least greatly suppress throughput deterioration otherwise occurring due to an increase in uplink overhead while at the same time increasing or maximizing the accuracy of the scheduling process. This leads to improvements in use efficiency of radiocommunication resources.

The other objects and methods of achieving the objects will be readily understood in conjunction with the description of embodiments of the present invention and the drawings.

### BRIEF DESCRIPTION OF DRAWINGS

Fig. 1 is a diagram showing a configuration of a cellular radiocommunication system.
Fig. 2 is a configuration diagram of a base station apparatus.
Fig. 3 is a configuration diagram of a communication terminal device, also known as a mobile station.
Fig. 4 is a sequence diagram showing a feedback information reporting procedure using a periodic feedback technique.
Fig. 5 is a sequence diagram showing a feedback information reporting procedure using an aperiodic feedback technique.
Fig. 6 is a diagram showing a feedback information selection procedure.
Fig. 7 is a diagram showing a layout of sub-bands within a system bandwidth.
Fig. 8 is a diagram showing a concept of wideband channel quality indication (CQI).
Fig. 9 is a diagram showing a concept of subband CQI.
Fig. 10 is a diagram for explanation of a wideband precoding matrix indicator (PMI).
Fig. 11 is a diagram for explanation of a subband PMI.
Fig. 12 is a diagram for explanation of a first example embodying the invention.
Fig. 13 is a diagram for explanation of a second example.
Fig. 14 is a diagram for explanation of a third example.
Fig. 15 is a diagram for explanation of a fourth example.
Fig. 16 is a diagram for explanation of a fifth example.
Fig. 17 is a diagram showing one example of a procedure for determining whether a mobile station is traveling at high speeds in the fifth example.
Fig. 18 is a diagram showing another example of the procedure for judging whether a mobile station is moving at high speeds in the fifth example.
Fig. 19 is a diagram for explanation of a sixth example.
Fig. 20 is a diagram for explanation of a seventh example.
Fig. 21 is a diagram for explanation of an eighth example.
Fig. 22 is a diagram for explanation of a ninth example.
Fig. 23 is a diagram for explanation of a tenth example.
Fig. 24 is a diagram for explanation of an eleventh example.
Fig. 25 is a diagram for explanation of a twelfth example.
Fig. 26 is a diagram showing a correspondence relationship of feedback modes in E-UTRA and the examples of this invention.
Fig. 27 is a diagram showing a procedure for updating a feedback information transmission method at a mobile station.
Fig. 28 is a diagram showing a procedure for transmission of feedback information at the mobile station.

### DETAILED DESCRIPTION OF THE EMBODIMENTS

In the embodiments as will be described below, these will be explained by dividing into a plurality of sections or embodiments when the need arises as a matter of convenience; however, these are not the ones that are mutually irrelevant to each other but are in a relationship where one of them is a modified example, detailed configuration or supplementary explanation of a part or the whole of the other, except as otherwise expressly provided in the description. Also note that in the embodiments below, in cases where a specific number of elements (including quantities, numerical values, amounts, ranges, etc.) is recited, such number is not to be construed as limiting the invention and may alternatively be set to other numbers or values which are either less than or greater than the specific number, except when the number is specifically defined in the description and in case the invention is principally apparently limited to the specific number.

Furthermore in the embodiments to be stated below, it goes without saying that constituent elements (also including elemental steps) thereof are not necessarily essential ones except when these are the ones that are specifically pointed out and in case these are considered to be apparently essential in principle to the invention. Similarly in the embodiments below, when referring to the form, shape or positional relationship of a constitution element or the like, it should be interpreted that its form, shape or positional relation also includes any possible equivalents with substantial similarities thereto, except when it is the one that is particularly defined and in case such is considered to principally exceptional without doubt. The same goes for the above-noted numerical value and ranges.

Hereinafter, currently preferred embodiments of this invention will be described in detail with reference to the accompanying drawings below. In all drawings for explanation of the embodiments, the same parts or components are denoted by the same reference numerals as a general rule, and repetitive explanations thereof will be eliminated in the description below.

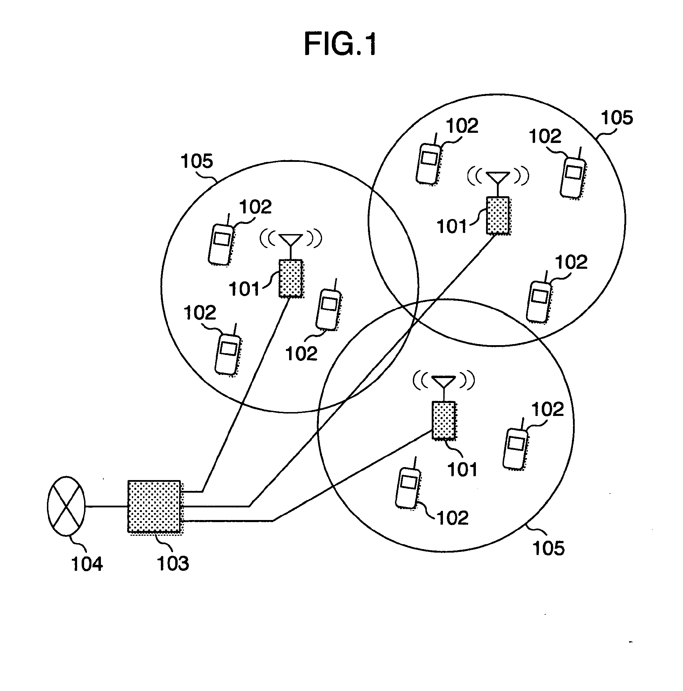

A cellular radio-communication system in accordance with one embodiment of this invention will be explained in detail with reference to some of the drawings, by especially exemplifying the E-UTRA technology stated supra. Fig. 1 shows an exemplary configuration of the cellular radiocommunication system. As shown in Fig. 1, the cellular radiocommunication system is generally configured from a plurality of base stations (BSs) and a plurality of handheld digital communication terminals, called the mobile stations (MSs), such as multifunction cellular phones, personal digital assistants (PDAs), and ultrasmall-size personal computers (PCs) with wireless communication functionalities. Each base station apparatus 101 is connected by a wired communication line to a base station control apparatus 103. This control apparatus 103 is linked by a wired cable line to a network 104. A mobile station 102 is wirelessly connected to its associated base station apparatus 101 and thus is enabled to communicate with the network 104 via the base station control apparatus 103. In the system of Fig. 1, the base station apparatus 101 is arranged to perform assignment or allocation of any available communication resources and notifies mobile station 102 of allocation information. A cell 105 generally indicates a land area or zone, within which mobile stations 102 placed therein are able to make communications by means of wireless interconnection with base station apparatus 101.

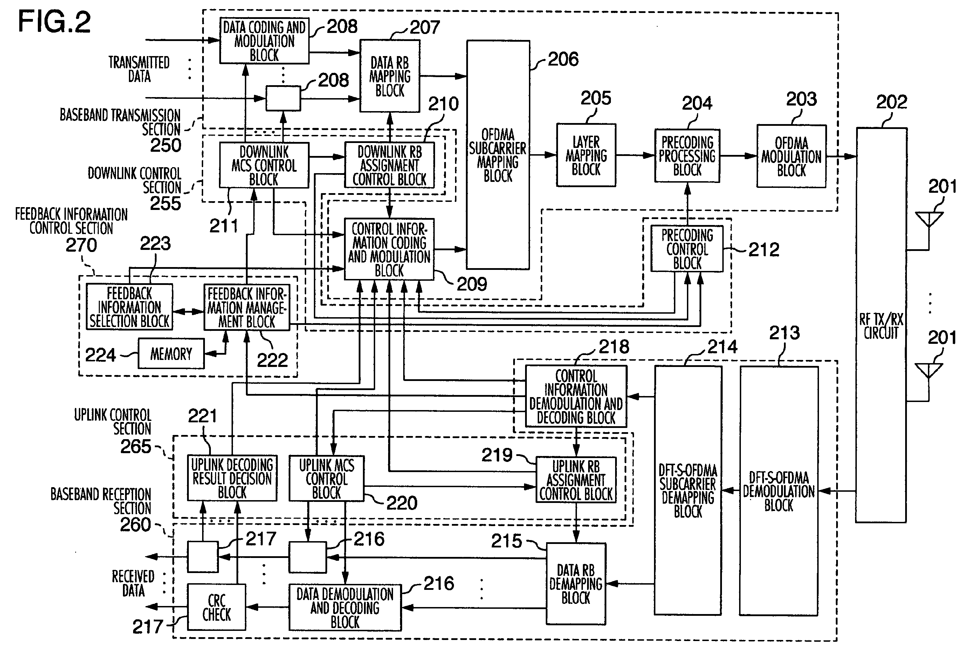

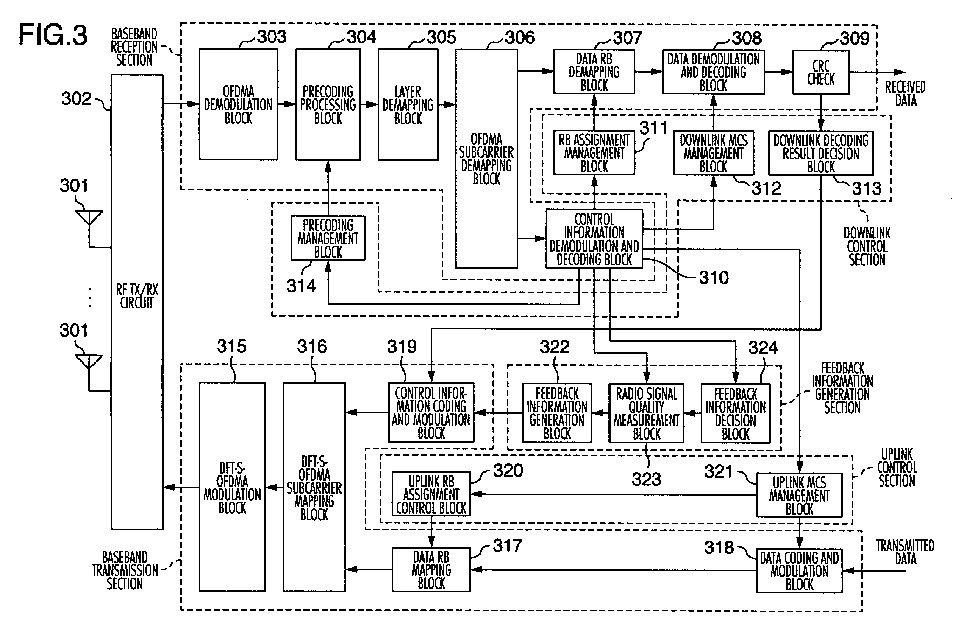

Exemplary configurations of the base station apparatus and mobile terminal device in the cellular radiocommunication system are shown in Figs. 2 and 3, respectively.

Figs. 2 and 3 show, in particular, configuration examples of the base station apparatus and mobile terminal device for realization of the orthogonal frequency division multiple access (OFDMA) and discrete Fourier transform-spread (DFT-S) based scheme-called the "OFDMA/DFT-S-OFDMA"-in E-UTRA system, although the illustrative embodiment should not exclusively be limited thereto and may alternatively be arranged to employ other similar suitable radiocommunication schemes.

In Fig. 2, the base station apparatus 101 has a baseband transmission section 250, down-link control section 255, baseband reception section 260, up-link control section 265, feedback information control section 270, radio transmission/reception (Tx/Rx) circuit 202, and Tx/Rx antenna 201. The baseband transmitter 250 has its function of generating a transmission baseband signal, and includes a data coding and modulation block 208 which performs transmission data error correction coding and sub-carrier modulation, a data resource-block mapping block 207 which processes a modulation symbol(s) being sent forth toward a plurality of mobile stations for mapping to a resource block (RB) which is a unit of frequency resource of the OFDMA, a control information coding/modulation block 209 which performs coding and modulation of control information, an OFDMA subcarrier mapping block 206 which places data and control information in an OFDMA subcarrier region, a layer mapping block 205 which performs mapping to a spatial layer in spatial multiplexing, a precoding processing block 204 which performs precoding processing prior to signal transmission, and an OFDMA modulation block 203 which performs inverse fast Fourier transform (IFFT) and addition of cyclic prefix (CP). The downlink controller 255 functions to control data communications over a downlink, and includes an RB assignment control block 210 which performs assignment of downlink transmission-use frequency resource (RB) to each mobile station, a modulation and coding scheme (MCS) control block 211 which determines a coding/modulation method, i.e., MCS, to be used by the downlink, and a precoding control block 212 which controls a precoding matrix to be used for the precoding processing.

The baseband receiver 260 functions to detect data and control information from its received baseband signal, and includes a DFT-S-OFDMA demodulation block 213 which performs CP detection, fast Fourier transform (FFT) processing and inverse discrete Fourier transform (IDFT) processing, a DFT-S-OFDMA subcarrier demapping block 214 which extracts data and control information that are placed in a demodulated DFT-S-OFDMA subcarrier region, a data RB demapping block 215 which extracts on a per-terminal basis a modulation symbol that was mapped to RB, a control information decoding/demodulation block 218 which performs decoding and demodulation of control information, a data decoding/demodulation block 216 which performs data demodulation and error correction decoding, and a cyclic redundancy check (CRC) block 217 which checks whether uplink data is successfully decoded from a decoding result.

The uplink controller 265 functions to control uplink data communications and includes an RB assignment control block 219 which performs assignment of uplink transmission-use frequency resource (RB) to each mobile station, an uplink MCS control block 220 which determines MCS for the uplink use, and an uplink decoding result decision block 221 which performs judgment as to whether the decoding of uplink-received data is successful or not.

The feedback information controller 270 includes a feedback information management block 222 which performs management of feedback information acquired from a mobile station, a feedback information selection block 223 which determines the type and acquisition method of feedback information to be acquired from a mobile station, and a memory 224 which stores the feedback information obtained from the mobile station. The radio transmission/reception (Tx/Rx) circuit 202 performs conversion of a baseband signal and a radio frequency (RF) signal along with electrical power amplification. The Tx/Rx antenna 201 performs transmission of RF signal toward the radio space and also reception of incoming RF signals. In this embodiment, the determination of the type or else of the information to be fed back by a mobile station is performed by the feedback information selector 223 in response to receipt of the feedback information or the like. The feedback information is received from each mobile station via the control information decoder/demodulator 218 of the base station 101, and is then stored in the memory 224 through the feedback information manager 222. The feedback information manager 222 reads the feedback information out of the memory 224 when the need arises and then passes it to the feedback information selector 223 and/or MCS controller 211. The type or else of the information to be fed back by mobile station is notified or reported to each mobile station via the information signal coder/modulator 209.

As shown in Fig. 3, each mobile station device 102 has a baseband reception section, a downlink control section, an uplink control section, a baseband transmission section, a feedback information generation section, a radio transmission/reception (Tx/Rx) circuit 302, and a Tx/Rx antenna 301.

The baseband receiver has its function of detecting data, control information and report information from a baseband signal received. The baseband receiver includes an OFDMA demodulator block 303 which performs CP detection and FFT processing, a precoding processing block 304 which performs reception-side processing tasks relating to the precoding that was performed prior to transmission, a layer demapping block 305 which performs demapping from a spatial layer in spatial multiplexing, an OFDMA subcarrier demapping block 306 which extracts data and control information placed in a demodulated OFDMA subcarrier region, a data RB demapping block 307 which extracts a modulation symbol that was mapped to RB, a control information decoding/demodulation block 310 which performs demodulation and decoding processing of control information, a data decoding/demodulation block 308 which performs data demodulation and error correction decoding, and a CRC check block 309 which checks whether downlink data is successfully decoded from a decoding result.

The downlink control section shown in Fig. 3 functions to control data communications over the downlink. This downlink controller includes an RB assignment management block 311 which instructs a downlink transmission-use frequency resource (RB) that was assigned by the base station to the data RB demapper 307, a downlink MCS control block 312 which gives an instruction to the data decoder/demodulator 308, which instruction specifies an MCS for the downlink use that is assigned by the base station, a downlink decoding result decision block 313 which performs judgment as to whether downlink-received data decoding is successful or not, and a precoding management block 314 which sends and reports a precoding matrix that is assigned by the base station to the precoding manager 314.

The baseband transmitter of Fig. 3 functions to generate a transmission baseband signal. This baseband transmitter includes a data coding/modulation block 318 which performs error correction coding and carrier modulation of transmission data, a data RB mapping block 317 which performs mapping to the RB a modulation symbol to be sent to a base station, a control information coding/modulation block 319 which performs coding and modulation of control information, a DFT-S-OFDMA subcarrier mapping block 316 which places data and control information in a DFT-S-OFDMA subcarrier region, and a DFT-S-OFDMA modulation block 315 which performs discrete Fourier transform (DFT) processing and IFFT and CP addition. The uplink controller functions to control uplink data communications and includes an RB assignment control block 320 which notifies the data RB mapper 317 of an uplink transmission-use frequency resource (RB) that is to be reported from the base station, and an uplink MCS management block 321 which gives an instruction to the data coder/modulator 318, which instruction is as to an uplink-use MCS that is assigned by the base station.

The feedback information generator of Fig. 3 includes a feedback information decision block 324 which manages the type and transmission method of the feedback information to be indicated by the base station, a radio signal quality measurement block 323 which performs measurement of the quality of a received signal and other operations, and a feedback information generation block 322 which determines some major parameters, such as a channel quality indication (CQI) that becomes an indicator or "index" of downlink channel quality and desired precoding matrix information-i.e., precoding matrix indicator (PMI)-and also a rank indication (RI) for use as the index of the number of spatial layers in the spatial multiplexing. The feedback information that was generated by the feedback information generator 322 is coded and modulated by the control information coder/modulator 319 and is then sent as a DFT-S-OFDMA signal to the base station via the DFT-S-OFDMA subcarrier mapper 316 and DFT-S-OFDMA modulator 315. The radio Tx/Rx circuit 302 performs conversion between a baseband signal and RF signal and power amplification. The Tx/Rx antenna 301 performs transmission of RF signal to the radio space and reception of inbound RF signals.

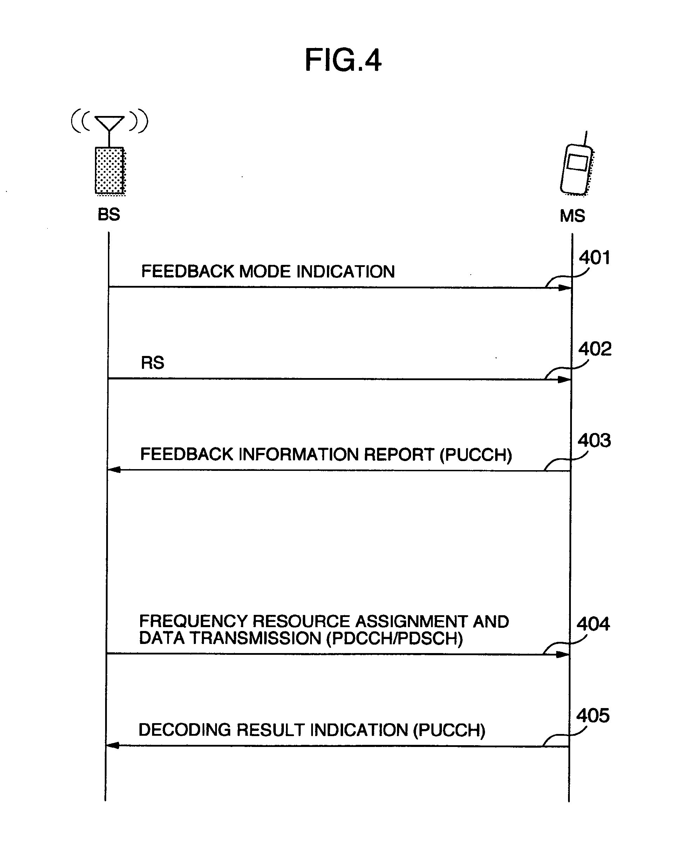

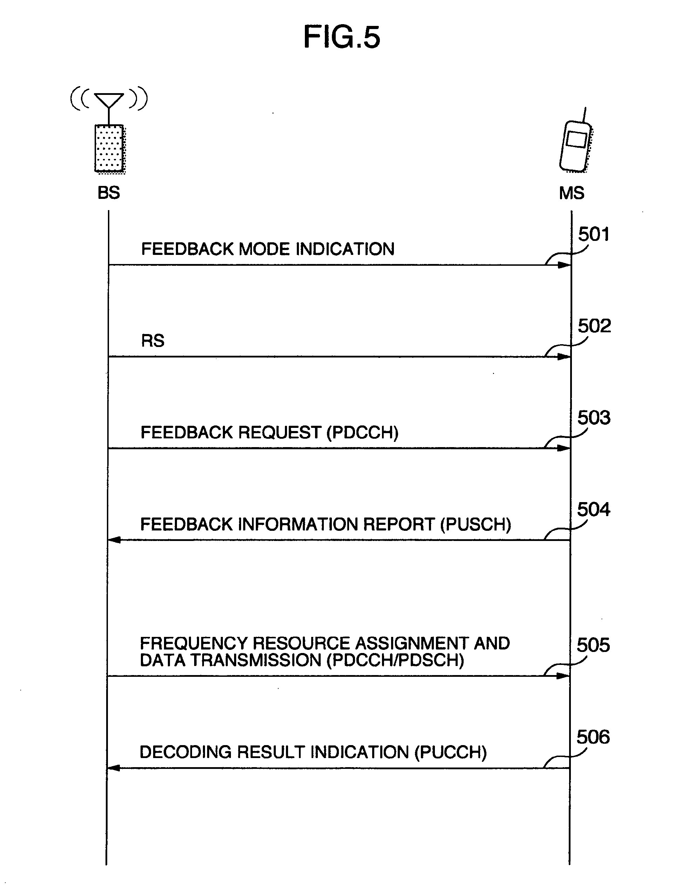

Figs. 4 and 5 are diagrams showing procedures of feedback information acquisition and downlink data transmission in this embodiment under an assumption that the evolved universal terrestrial radio access (E-UTRA) is employed. In E-UTRA, a periodic feedback method or scheme and an aperiodic feedback scheme are defined. Figs. 4 and 5 show examples using the periodic feedback scheme and aperiodic feedback scheme, respectively.

In Fig. 4, the type and transmission method of the feedback information which have been determined by the feedback information selector 223 of a base station 101 are reported by this base station to a communication terminal device 102, called the mobile station. This reporting is performed by the signaling of an upper layer, which is under management of the feedback information decision block 324 of the mobile station 102. In a sequence 402, the base station 101 sends forth a radio signal called the reference signal (RS) toward the mobile station 102. This RS signal is used for measurement of downlink communication channel quality, which is performed by the radio signal quality measurement block 323 of the mobile station.

In a sequence 403, the feedback information that was generated by the feedback information generator 322 of mobile station 102 is reported by the mobile station to base station 101 using the periodic feedback scheme. This reporting process is mainly performed by way of a control channel, called the physical uplink control channel (PUCCH). Feedback of the sequence 403 is periodically performed at time intervals assigned by the base station in the sequence 402. The feedback information from the mobile station is passed via the feedback information manager 222 of base station 101 to the feedback information selector 223, the downlink MCS controller and the precoding controller stated supra.

A sequence 404 and its following sequences are for data transmission over the downlink. In the sequence 404, the base station 101 wirelessly transmits downlink frequency resource allocation information and downlink data to mobile station 102 by using a physical downlink control channel (PDCCH) and a physical downlink shared channel (PDSCH) as its control channel and data channel, respectively. A decoding result of the downlink data at this mobile station is reported to the base station 101 via the PUCCH control channel in a sequence 405.

In a sequence 501 shown in Fig. 5, the type of the feedback information which was determined by the feedback information selector 223 of base station 101 is reported by this base station to mobile station 102. This reporting process is performed by the signaling of an upper layer, which is under management of the feedback information decision block 324 of the mobile station. In a sequence 502, the base station 101 sends forth a signal called the reference signal (RS) toward the mobile station 102 in a similar way to the sequence 402 of Fig. 4. This RS signal is used for measurement of the downlink channel quality, which is performed by the radio signal quality measurer 323 of mobile station 102. In a sequence 503, the base station issues to the mobile station a request for transmission of feedback information by means of an aperiodic feedback scheme. In a sequence 504, the mobile station 102 uses the aperiodic feedback scheme to report feedback information to the base station, which information was generated by the feedback information generator 322 of mobile station 102. This reporting is done over a data channel, called the physical uplink shared channel (PUSCH). The feedback information from the mobile station is passed through the base station's feedback information manager 222 to the feedback information selector 223 and the downlink MCS controller and also the precoding controller. Sequences 505 and 506 are for downlink data transmission, which are similar to the sequences 404 and 405 in Fig. 4.

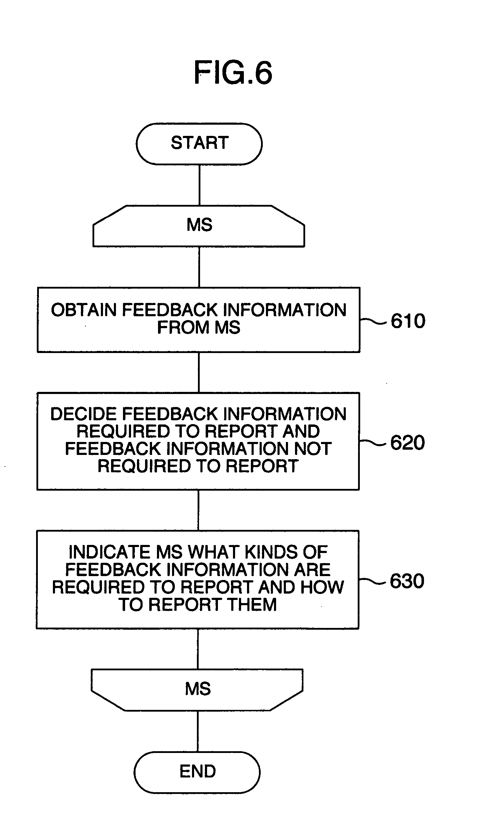

A feedback information selecting procedure in this embodiment will be described with reference to Fig. 6. Fig. 6 is a flow diagram showing the feedback information selection procedure in base station 101. In Fig. 6, the base station 101 performs selection of feedback information with respect to each mobile station 102, i.e., on a per-terminal basis. The base station 101 performs acquisition of feedback information for each mobile station 102 (at step 610). More specifically, the feedback information controller 270 acquires the feedback information by way of the control information decoder/demodulator 218. The feedback information manager 222 holds the feedback information in the memory 224. Next, the base station 101 determines or "judges" based on the acquired feedback information which one of feedback information is needed to be acquired and which one of feedback information is not needed to be obtained (at step 620). More specifically, the feedback information selector 223 gives access, under management of the feedback information manager 222, to the feedback information being presently stored in the memory 224 and then determines, based on such referencing result, specific feedback information to be acquired along with an acquisition method thereof. In responding to this determination result, the base station 101 notifies the mobile station 102 of the type and transmission method of the feedback information to be sent (at step 630). More precisely, the base station 101 reports the type and transmission method of the feedback information which are determined by the feedback information selector 223 to the mobile station 102 via the above-stated control information coder/modulator.

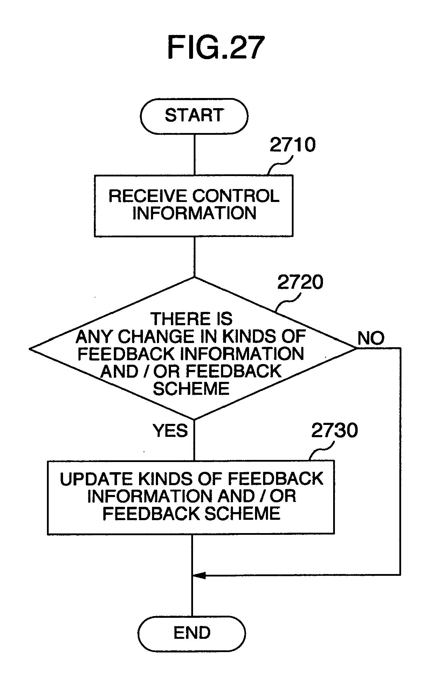

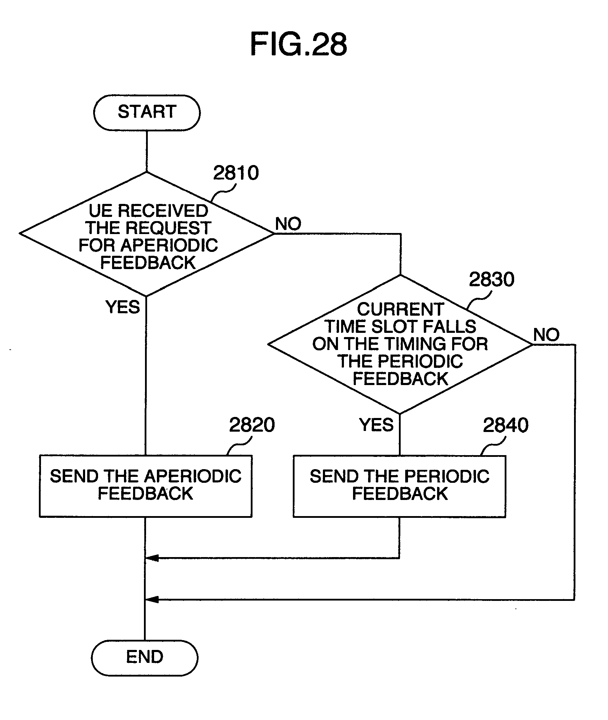

A procedure for transmission of the feedback information at mobile station 102 will be described using Figs. 27 and 28 below. Fig. 27 is a flow diagram showing a procedure for determining the to-be-acquired feedback information and its acquisition method based on the notice or report from the base station 101. In Fig. 27, the mobile station 102 receives the control information from base station 101 (at step 2710). The mobile station 102 performs judgment, based on the control information, as to whether there is an instruction for modification of the type of feedback information and its transmission method (at step 2720). In case there is a modification instruction of the feedback information type or the transmission method (i.e., if "YES" at step 2720), the mobile station 102 performs updating of the feedback information type and/or the transmission method. Fig. 28 is a flow diagram showing one example of the procedure in mobile station 102 for transmitting the feedback information at a certain timing. In Fig. 28, the mobile station 102 firstly judges whether there is a request from the base station 101 for performing aperiodic feedback transmission at the timing (at step 2810). This request corresponds to the feedback request 503 of Fig. 5. In case the aperiodic feedback transmission is required (i.e., if YES at step 2810), the mobile station 102 performs the aperiodic feedback transmission (at step 2820). In case such aperiodic feedback transmission is not required at the timing (i.e., if NO at step 2810), the mobile station 102 determines whether this timing is a timing for periodic feedback transmission (at step 2830). If this timing is such periodic feedback transmission timing, the mobile station 102 transmits the periodic feedback (at step 2840).

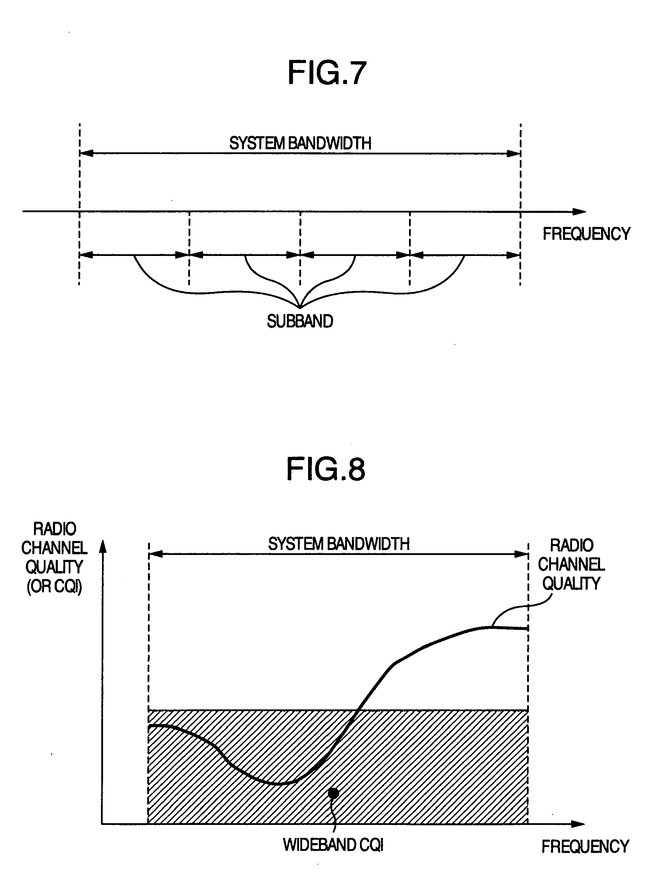

Next, examples of the feedback information will be given. A first one of them is an index CQI which represents the channel quality of a downlink. This index is the one that concerns either an overall region of a system bandwidth or any one of those sub-bands which are divided from the system bandwidth. Fig. 7 shows the system bandwidth and a layout of these subbands within the system bandwidth. As shown in Fig. 7, the system bandwidth is divided into a plurality of subbands. Note here that these subbands are not necessarily equal to one another in bandwidth.

An indicator CQI for the entire band is called the wideband CQI whereas CQI for a subband is called the subband CQI. Fig. 8 is a diagram showing the concept of the wideband CQI. In Fig. 8, the channel quality within the system bandwidth is measured by mobile station 102 by using the reference signal (RS) to be sent from its associated base station. The wideband CQI is an index which is representative of the channel quality of the entire band; basically, a single common CQI is defined with respect to the entire frequency band.

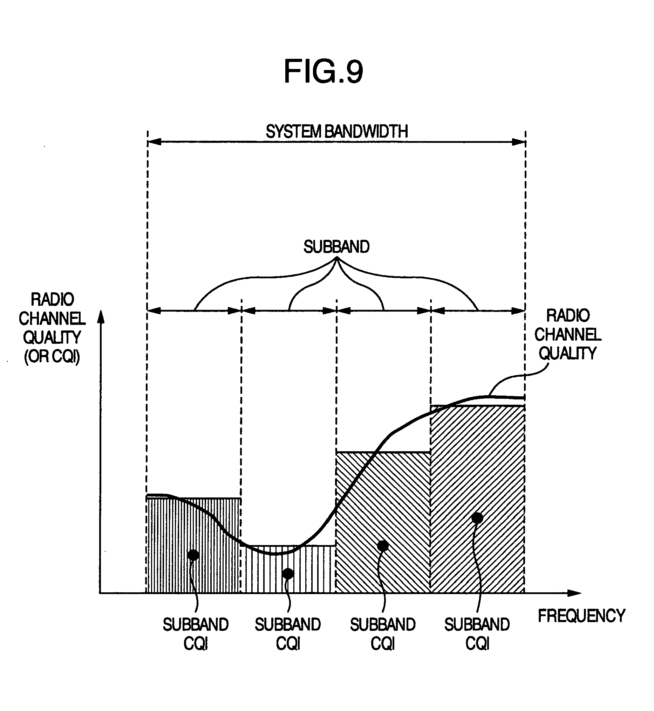

On the other hand, Fig. 9 is a diagram showing the concept of the subband CQI. In Fig. 9, the subband CQI is the one that is defined per subband. While the subband shown in Fig. 9 is an index which is representative of the channel quality of each subband, a subband CQI having a common index bridging over a plurality of subbands may alternatively be set up.

The information of a desired precoding matrix is the information as to the entire band of the system bandwidth or one part of it, i.e., subband. The relationship of the system bandwidth and subband is similar to that shown in Fig. 7; however, the subband layout for downlink channel quality is not always the same as the subband layout for the precoding matrix.

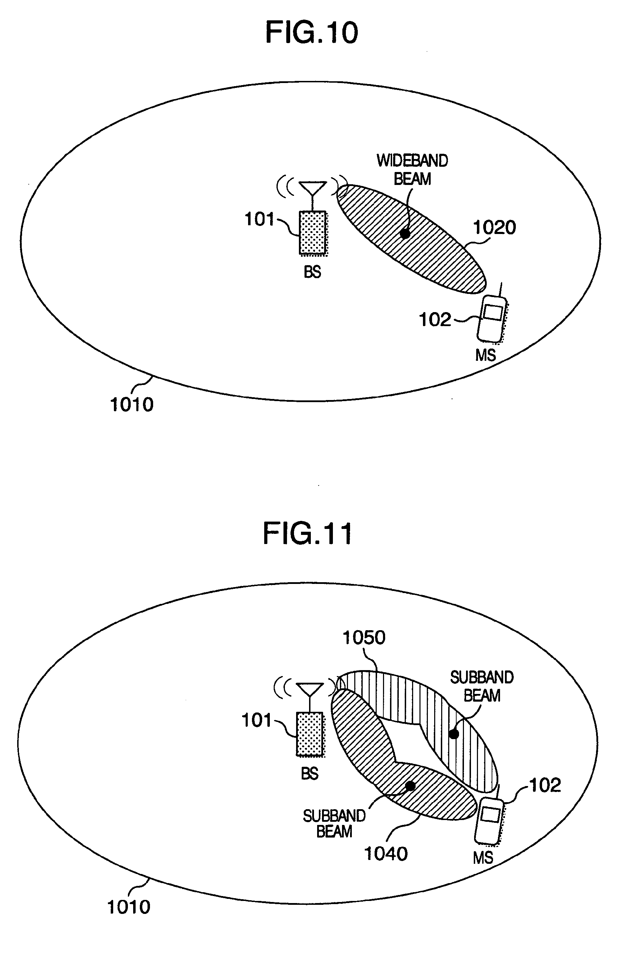

In this embodiment, a precoding matrix indicator (PMI) with respect to the entire band will be called the wideband PMI whereas a PMI for subband is called the subband PMI. Fig. 10 is a diagram showing the concept of the wideband PMI in data communication between a base station 101 and a mobile station 102 within a cell 1010 of the base station 101. Precoding processing using the feedback of a precoding matrix is aimed at improvement of a signal to interface-and-noise power ratio (SINR) of signal reception at the mobile station, by multiplying the precoding matrix to a transmission signal: in Fig. 10, this is represented as formation of a beam 1020. As shown in Fig. 10, the mobile station 102 selects the wideband PMI while assuming that the precoding matrix is used to form the wideband beam. The wideband PMI is the information of a precoding matrix preferred by the mobile station 102, which information is representative of the entire frequency band.

On the other hand, Fig. 11 is a diagram showing the concept of the subband PMI. In Fig. 11, the precoding processing is depicted by formation of a beam 1040, 1050 in a similar way to Fig. 11. As shown in Fig. 11, the mobile station 102 uses the precoding matrix to select the subband PMI with respect to each subband under an assumption that the beam 1040, 1050 is formed on a per-subband basis. In this way, the subband PMI is the information of a precoding matrix preferred by the mobile station within each subband, which information is defined per subband. While the subband PMI shown in Fig. 11 is the information of the mobile station 102's preferred precoding matrix within each subband, a subband PMI which covers two or more subbands may alternatively be set up.

A detailed explanation will be given of a feedback information selection method to be performed by a base station in this embodiment while citing some examples thereof. In particular, several practically implementable examples concerning the process at step 620 of Fig. 6 will be described below.

### (Example 1)

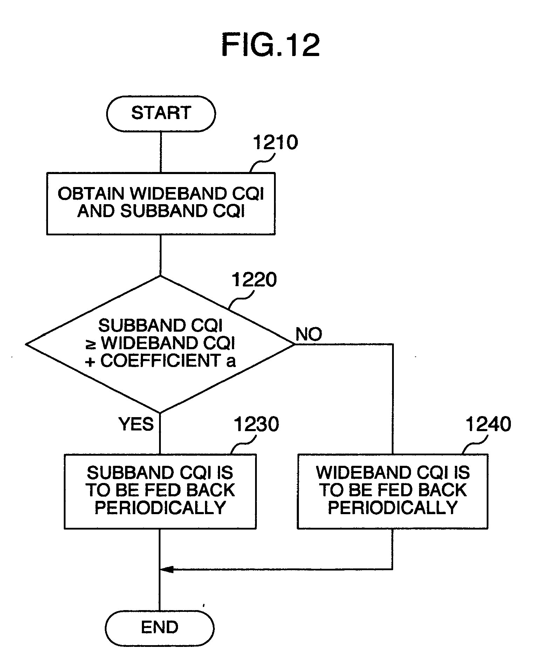

A first example of the above-stated embodiment will be explained using Fig. 12. In the first example, the feedback information will be explained by exemplifying a subband channel quality indicator (CQI) and a wideband CQI. In a case where the subband CQI is better than the wideband CQI by a degree greater than or equal to a predetermined level, the base station 101 causes the subband CQI to be periodically fed back to a mobile station 102; if this is not the case, the subband CQI is prevented from being periodically fed back to the mobile station.

Fig. 12 is a flow diagram showing one example of the procedure in the base station 101 for determination of which one of the wideband CQI and the subband CQI should be selected as the CQI to be periodically fed back from mobile station 102, based on a difference between the wideband CQI and subband CQI. In Fig. 12, the base station 101 acquires respective ones of the subband CQI and wideband CQI from the mobile station (at step 1210). Then, the base station 101 performs comparison of the subband CQI and wideband CQI thus acquired (at step 1220). In case the subband CQI is better than the wideband CQI by a degree greater than or equal to a predefined constant number or "coefficient" *a* (i.e., if "YES" at step 1220), the base station determines acquisition of the subband CQI by the periodic feedback scheme (at step 1230). In the other case (i.e., if "NO" at step 1220), the base station determines that the subband CQI is not acquired by the periodic feedback scheme and also that the wideband CQI is obtained (at step 1240). Note that in the case of the subband CQI being obtained by the periodic feedback scheme, the wideband CQI may be acquired by the periodic feedback scheme or, alternatively, may not be obtained thereby.

The CQI to be acquired by the base station in the first step of Fig. 12 may be the one that is acquired by the periodic feedback scheme or, alternatively, the one that is obtained by an aperiodic feedback scheme or, still alternatively, the one that is obtained by both of these schemes. In addition, the subband CQI to be acquired by the base station in the first step of Fig. 12 may be the one that is about each subband of the entire bandwidth or, alternatively, the one that relates to one of available subbands or, still alternatively, a subband CQI having a single index relative to a combination of two or more subbands. In case a plurality of subband CQIs have been obtained, in the comparison of subband CQI and wideband CQI of Fig. 12, if a part of the subband CQI is better than the wideband CQI by a degree greater than or equal to the coefficient *a*, for example, then it may be determined that the subband CQI is obtained by the periodic feedback scheme.

### (Example 2)

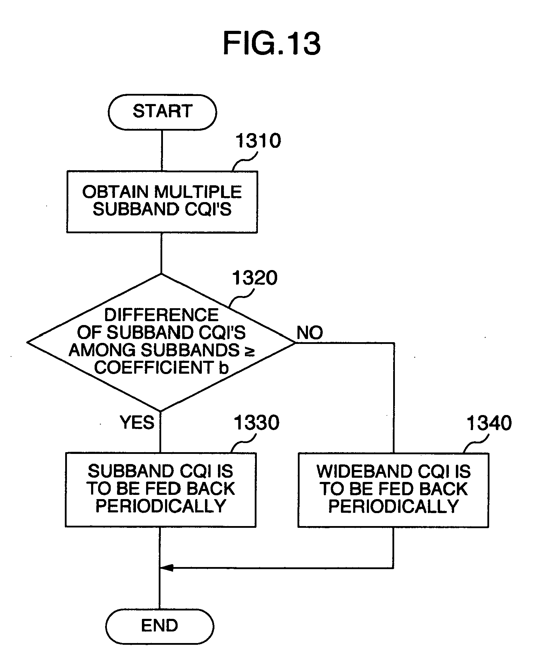

A second example of the illustrative embodiment will be described with reference to Fig. 13. In the second example, in a case where a difference between two or more subband channel quality indicators (CQIs) is greater than or equal to a predefined level, the base station 101 causes mobile station 102 to feed back a subband CQI periodically; if this is not the case, the base station 101 instructs mobile station 102 to stop periodical feedback of the subband CQI.

Fig. 13 is a flow diagram showing one example of the procedure in the base station 101 for determining, based on a difference between or among a plurality of subband CQIs, which one of the wideband CQI and subband CQI should be chosen as the CQI to be periodically fed back thereto from mobile station 102. In Fig. 13, the base station has acquired a plurality of subband CQI indicators from a mobile station(s), respectively (at step 1310). The base station calculates a difference between any two of the plurality of subband CQIs acquired (at step 1320). When a subband CQI is better than another subband CQI by a degree greater than or equal to a predetermined coefficient *b* (i.e., if YES at step 1320), the base station determines acquisition of the subband CQI by the periodic feedback scheme (at step 1330). If this is not the case (i.e., if NO at step 1320), it determines that the subband CQI is not acquired by the periodic feedback scheme and, alternatively, a wideband CQI is obtained (at step 1340). It should be noted that in the case of the subband CQI being acquired by the periodic feedback scheme, the wideband CQI may be acquired by the periodic feedback scheme or, alternatively, may not be obtained.

The subband CQI to be obtained by the base station in the first step of Fig. 13 may be the one that is acquired by the periodic feedback scheme or, alternatively, the one that is obtained by an aperiodic feedback scheme or, still alternatively, the one that is obtained by both of these schemes. In addition, the subband CQI to be acquired by the base station in the first step of Fig. 13 may be the one that concerns each subband of the entire bandwidth or, alternatively, the one that relates to a part of subbands or, still alternatively, a subband CQI having a single index relating to a combination of two or more subbands. Note however that due to the need for acquisition of a plurality of subband CQIs, it is desirable for the base station to have acquired multiple subband CQIs in units of subbands with respect to the plurality of subbands. In case three or more subband CQIs are obtained, in the comparison of multiple subband CQIs of Fig. 13, if a difference between any given two subband CQIs is better by a degree greater than or equal to the coefficient b, it may be determined to perform the subband CQI acquisition by the periodic feedback scheme. If a difference between the best subband CQI and the worst subband CQI is greater than or equal to the coefficient b then it may be determined to perform the subband CQI acquisition by the periodic feedback scheme.

### (Example 3)

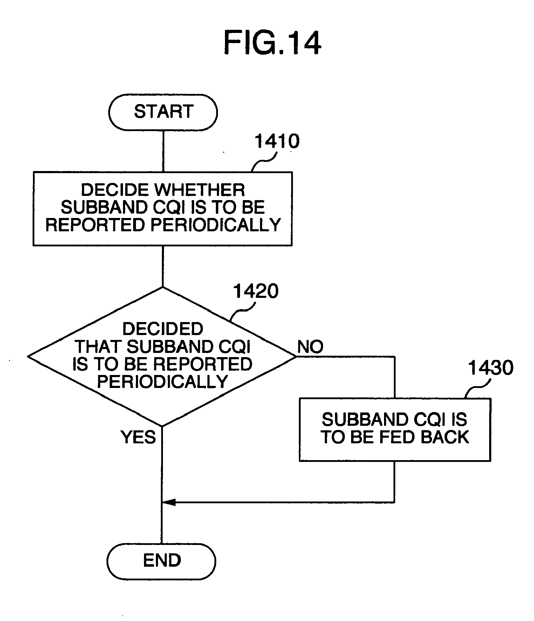

A third example applying thereto the illustrative embodiment will be described with reference to Fig. 14. In the third example, in a case where the base station 101 does not cause the mobile station 102 to perform the periodic subband CQI feedback, the base station 101 forces the subband CQI to be fed back aperiodically.

Fig. 14 is a flow diagram showing one example of the procedure in the base station 101 for determining acquisition of subband CQI from mobile station 102 by the aperiodic feedback scheme in case the subband CQI is not fed back periodically. In Fig. 14, the base station 101 first performs determination as to whether the subband CQI is acquired by the periodic feedback scheme (at step 1410). This determination can be done, for example, by a method similar to that explained in the first and second examples. Thereafter, the base station 101 judges whether a decision is made to acquire the subband CQI by the periodic feedback scheme (at step 1420). In case a decision is made not to acquire any subband CQI by the periodic feedback scheme (i.e., if NO at step 1420), the base station 101 acquires the subband CQI by an aperiodic feedback scheme (at step 1430).

In Fig. 14, the subband CQI to be obtained by the aperiodic feedback scheme may be the one that is about each subband of the entire bandwidth or, alternatively, the one that relates to one part of subbands or, still alternatively, a subband CQI having a common index or parameter relating to a plurality of subbands.

In the case where the subband CQI is not acquired by the periodic feedback scheme, a result is that the CQI to be obtained by the periodic feedback scheme becomes the wideband CQI only. At this time, in the case of a method similar to the method(s) of the first and second examples being used to determine whether the subband CQI should be obtained by the periodic feedback scheme or not, it is possible according to this example to use as a decision reference or "criterion" the subband CQI that was obtained by the aperiodic feedback scheme. At this time, in case a need is felt to suppress an uplink overhead otherwise occurring due to aperiodic CQI feedback, this example may be modified to obtain by the aperiodic feedback scheme a single subband CQI having the common index relative to a plurality of subbands.

### (Example 4)

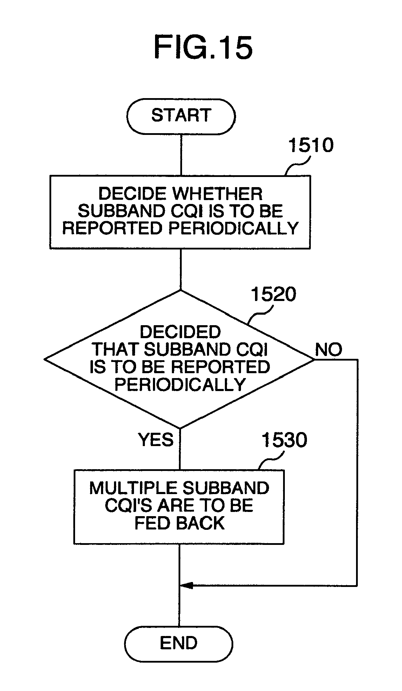

A fourth example applying thereto the illustrative embodiment will be described with reference to Fig. 15. In the fourth example, in a case where the base station 101 causes mobile station 102 to perform periodical subband CQI feedback, the base station 101 forces mobile station 102 to aperiodically feed back a plurality of subband CQIs.

Fig. 15 is a flow diagram showing one example of the procedure in the base station 101 for determining the acquisition of a plurality of subband CQIs from mobile station 102 by an aperiodic feedback scheme in the case of the mobile station being forced to perform periodic subband CQI feedback. In Fig. 15, the base station first determines whether the subband CQI acquisition is performed by the periodic feedback scheme or not (at step 1510). This determination can be done, for example, by a method similar to those of the first and second examples stated supra. Thereafter, the base station 101 judges whether a decision is made to acquire the subband CQI by the periodic feedback scheme (at step 1520). In case the decision is made to acquire the subband CQI by the periodic feedback scheme (i.e., if YES at step 1520), the base station obtains a plurality of subband CQIs by the aperiodic feedback scheme (at step 1530).

In Fig. 15, the individual subband CQI to be obtained by the aperiodic feedback scheme may be the one that is about each subband of the entire bandwidth or, alternatively, the one that relates to one part of subbands or, still alternatively, a subband CQI having a common index relative to a plurality of subbands.

In the E-UTRA, a relatively longer time is taken for completion of the acquisition of the subband CQI of every bandwidth part (BP) for the reason which follows: in an event that the mobile station 102 wirelessly transmits its subband CQIs by the periodic feedback scheme, it is a must for the mobile station to sequentially send, one at a time, the subband CQIs of respective BPs while at the same time routinely accessing or "circuiting" a plurality of BPs which are divided from the system bandwidth. In this case, if multiple subband CQIs are acquired by the technique of this example immediately after startup of the subband CQI acquisition using the periodic feedback scheme, the base station 101 is able to quickly execute scheduling processing by utilization of such subband CQIs. At this time, in case it is required to more quickly perform the scheduling by use of the subband CQIs, the example may be arranged so that the base station 101 uses the aperiodic feedback scheme to obtain the subband CQI per subband with respect to each subband of the entire bandwidth.

### (Example 5)

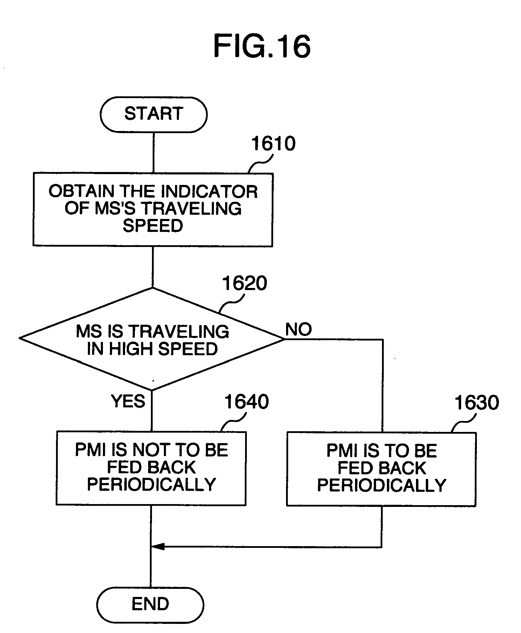

A fifth example employing the illustrative embodiment will be described with reference to Figs. 16, 17 and 18. In the fifth example, the base station 101 causes mobile station 102 to periodically feed back a precoding matrix indicator (PMI) in cases where the mobile station is not moving at high speeds; in other cases, the base station 101 forces the mobile station 102 to stop the execution of such periodical PMI feedback.

Fig. 16 is a flow diagram showing one example of the procedure in the base station for determining whether the mobile station 102 should be forced to feed back the PMI periodically, based on judgment as to whether the mobile station is moving at high speeds. In Fig. 16 the base station 101 acquires an index concerning the base station 101's moving or "traveling" speed (at step 1610). Then, the base station 101 judges whether the mobile station is moving at high speeds (step 1620). In case the base station 101 judges that the mobile station is moving at high speeds, the base station determines that PMI is not obtained by the periodic feedback scheme (1640). Otherwise, it determines that PMI is obtained by the periodic feedback scheme (1630).

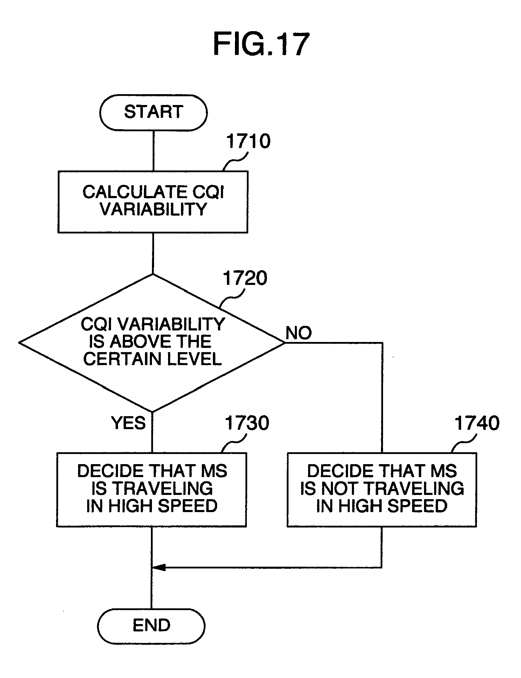

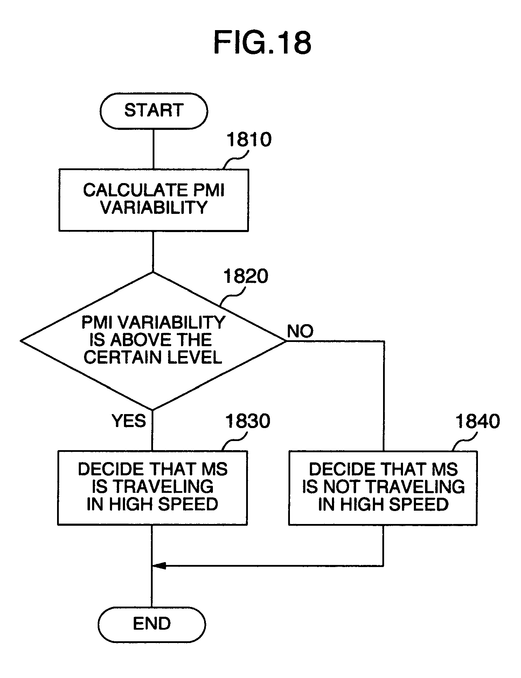

In Fig. 16, whether the mobile station is moving at high speeds or not is determinable by a process having the steps of permitting the mobile station to measure its moving speed or an index similar thereto, causing it to report a measurement result to the base station, and comparing it to a predefined threshold value. Alternatively, as shown in Figs. 17 and 18, a decision may be made using feedback information. An explanation will be given below of a method of allowing the base station to use the feedback information to judge whether the mobile station is moving at high speeds or not.

Fig. 17 is a flow diagram showing one example of the procedure for allowing the base station 101 to determine based on a time variation of CQI whether the mobile station of interest is moving at high speeds. In Fig. 17, the base station 101 acquires CQI from the mobile station and calculates its variation with time (at step 1710). The base station 101 judges whether the CQI's time variation is greater than or equal to a prespecified level (at step 1720): if the former is greater than or equal to the latter, then the base station 101 determines that the mobile station is moving at high speeds (step 1730); otherwise, the base station 101 decides that the mobile station is not moving at high speeds (1740).

In Fig. 17, the CQI to be used for the time change calculation may be the one that was acquired by the periodic feedback scheme or, alternatively, the one that was obtained by the aperiodic feedback scheme or, still alternatively, the one that was obtained by both of these feedback schemes. Also note that in Fig. 17, the CQI for use in the time change calculation may be either a wideband CQI or a subband CQI. In case a need is felt to use the CQI acquired at a constant time interval for the purpose of time change calculation, the CQI that was obtained by the periodic feedback scheme may be employed.

Fig. 18 is a flow diagram showing one example of the procedure for allowing the base station 101 to determine based on a time change of PMI whether the mobile station is moving at high speeds or not. In Fig. 18, the base station 101 is monitoring a time change of the PMI that has been acquired from the mobile station (at step 1810). The base station 101 judges whether the PMI exhibits a change with time at a frequency greater than or equal to a fixed level (step 1820). In case the PMI's time change is greater than or equal to the fixed level, the base station 101 judges that the mobile station 102 is moving at high speeds (1830); otherwise, the base station 101 judges that the mobile station is not moving at high speeds (1840).

In Fig. 18, the PMI to be used for the time change calculation may be the one that was acquired by the periodic feedback scheme or, alternatively, the one that was obtained by the aperiodic feedback scheme or, still alternatively, the one that was obtained by both schemes. Also note that in Fig. 18, the PMI for use in the time change calculation may be either a wideband PMI or subband PMI. In case it is preferred to use a PMI which is obtained at a fixed time interval for the purpose of the time variation calculation, the PMI that was acquired by the periodic feedback scheme may be used therefor.

Although the methods of Figs. 17 and 18 are such that any one of them is employable, these are not exclusive to each other and thus are usable together in combination. For instance, in a case where the mobile station is judged by at least one of the schemes of

Figs. 17 and 18 to be moving at high speeds, the base station may finally decide that the mobile station is moving at high speeds. Alternatively, in a case where the base station fails to acquire PMI and has obtained CQI, the judgment as to whether the mobile station is moving at high speeds or not may be performed by the scheme of Fig. 17; in another case where the base station obtained the PMI, the judgment may be done by the scheme of Fig. 18.

### (Example 6)

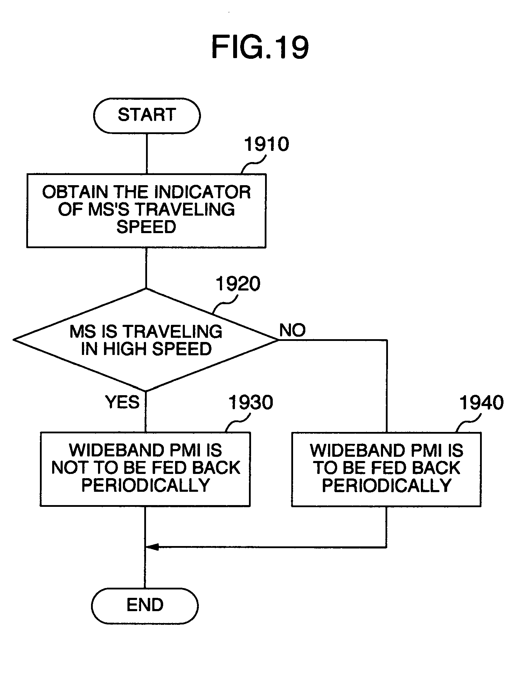

A sixth example employing the illustrative embodiment will be described with reference to Fig. 19. In the sixth example, the base station 101 causes the mobile station 102 to perform periodical feedback of a wideband precoding matrix indicator (PMI) in case the mobile station is not moving at high speeds; otherwise, the base station 101 forces mobile station 102 not to feed back the wideband PMI periodically.

Fig. 19 is a flow diagram showing one example of the procedure in the base station 101 for determining whether the mobile station 102 should be caused to perform periodical feedback of wideband PMI, by deciding whether the mobile station is moving at high speeds or not. In Fig. 19, the base station 101 acquires an index concerning the moving or "traveling" speed of the mobile station 102 (at step 1910). Then, the base station determines whether the mobile station is moving at high speeds (at step 1920). In case the mobile station is judged to be moving at high speeds, a decision is made not to obtain a wideband CQI by the periodic feedback scheme (step 1930). Otherwise, a decision is made to obtain the wideband PMI by the periodic feedback scheme (1940).

As in this example, by limiting the PMI to be fed back periodically to the wideband PMI only, it becomes possible to suppress an uplink overhead otherwise occurring due to the PMI even when acquiring the PMI by the periodic feedback scheme.

In Fig. 19, whether the mobile station is moving at high speeds is determinable by a process having the steps of letting the mobile station measure its moving speed or an index similar thereto, causing it to report a measurement result to the base station, and comparing it to a predefined threshold value. Alternatively, the determination may be done using feedback information, such as CQI, PMI or the like, in a similar way to the processing of Fig. 17 or 18 as explained in the fifth example or a combination of the processes of Figs. 17 and 18.

### (Example 7)

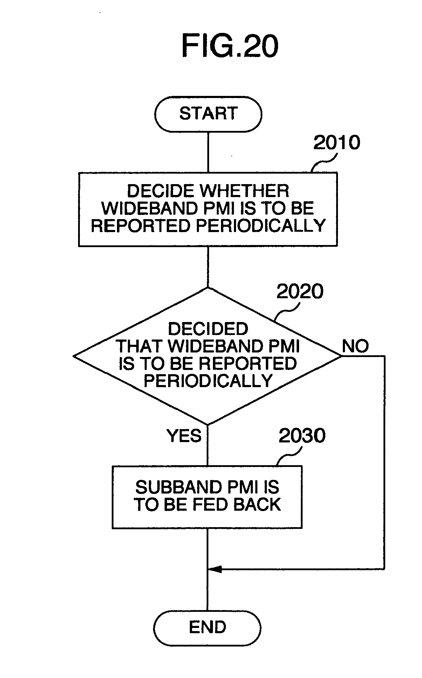

A seventh example using the illustrative embodiment will be described with reference to Fig. 20. In the seventh example, when the base station 101 causes mobile station 102 to perform periodical feedback of a wideband PMI, the mobile station is forced to feed back a subband PMI aperiodically.

Fig. 20 is a flow diagram showing one example of the procedure for enabling the base station 101 to determine that the subband PMI is acquired from the mobile station by the aperiodic feedback scheme in the case of the wideband PMI being forced to be fed back periodically. In Fig. 20, the base station first determines whether the wideband PMI is obtained by periodic feedback scheme (at step 2010). This determination can be performed, for example, by a method similar to that stated in the sixth example. When it is determined that the wideband PMI is obtained by the periodic feedback scheme (i.e., if YES at step 2020), the base station acquires the subband PMI by the aperiodic feedback scheme (at step 2030).

In Fig. 20, the PMI that is acquired by the aperiodic feedback scheme may be the one that is about each subband of the entire bandwidth or, alternatively, the one that relates to one part of subbands or, still alternatively, a subband PMI having the information of a desired precoding matrix that is in common for a plurality of subbands. When it is necessary to suppress the frequency of a subband PMI report(s), one exemplary approach is to arrange the subband PMI to be acquired by the aperiodic feedback scheme so that this is a subband PMI per subband with respect to each subband of the entire bandwidth.

### (Example 8)

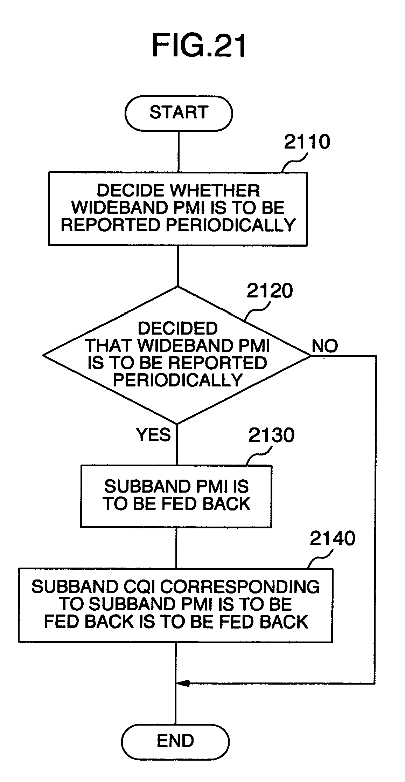

An eighth example using the illustrative embodiment will be described with reference to Fig. 21. In the eighth example, when the base station 101 causes mobile station 102 to perform periodical feedback of wideband precoding matrix indicator (PMI), the former forces the latter to feed back a subband PMI aperiodically while simultaneously causing it to feed back a subband channel quality indicator (CQI) corresponding to the subband PMI aperiodically.

Fig. 21 is a flow diagram showing one example of the procedure in the base station for acquiring from the mobile station a subband PMI and a subband CQI corresponding to the subband PMI by the aperiodic feedback scheme in the case of the wideband PMI being forced to be fed back periodically. In Fig. 21, the base station first determines whether the wideband PMI is acquired by the periodic feedback scheme (at step 2110). This determination can be done by a method similar to that stated in the sixth example stated supra. In case a decision is made to acquire the wideband PMI by the periodic feedback scheme (i.e., if YES at step 2120), the base station acquires the subband PMI by the aperiodic feedback scheme (at step 2130). When it is determined that the wideband PMI is obtained by the periodic feedback scheme, a subband CQI corresponding to the subband PMI is further obtained by the aperiodic feedback scheme (at step 2140). Note here that in the case of using either a subband PMI of a certain subband or a subband PMI which is common for or "shared" by a plurality of subbands, the above-stated subband CQI corresponding to the subband PMI refers to a subband CQI with respect to the same subband or a common subband CQI shared by a combination of the same subbands.

In Fig. 21, the subband PMI that is acquired by the aperiodic feedback scheme may be the one that concerns each subband of the entire bandwidth or, alternatively, the one that relates to one part of available subbands or, still alternatively, a subband PMI having the information of a desired precoding matrix that is shared by multiple subbands. When a need is felt to suppress an uplink overhead otherwise occurring due to the aperiodic feedback of the subband PMI and subband CQI, an exemplary approach is to obtain, by the aperiodic feedback scheme, one pair of a subband PMI having the information of a single desired precoding matrix with respect to a combination of multiple subbands and a subband CQI having a single index relative to a combination of a plurality of corresponding subbands.

### (Example 9)

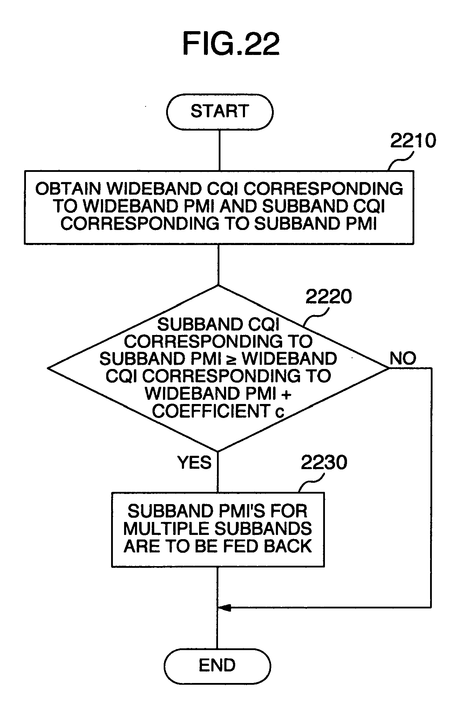

A ninth example applying this invention thereto will be described with reference to Fig. 22. In the ninth example, in a case where a subband CQI corresponding to subband PMI is better than a wideband CQI corresponding to wideband PMI by a degree greater than or equal to a predetermined level, the base station 101 causes mobile station 102 to feed back a plurality of subband PMIs aperiodically.

Fig. 22 is a flow diagram showing one example of the procedure in the base station for determining whether two or more subband PMIs are to be acquired by the aperiodic feedback scheme from the mobile station, based on a difference between the subband CQI corresponding to the subband PMI and the wideband CQI corresponding to the wideband PMI. In Fig. 22, the base station acquires from the base station the wideband PMI and subband PMI along with the wideband CQI corresponding to the wideband PMI and the subband CQI corresponding to the subband PMI (at step 2210). Note that the wideband CQI corresponding to the wideband PMI refers to a wideband CQI in the case of utilizing a single wideband PMI which covers the entire bandwidth. Additionally, in the case of using either a subband PMI of certain subband or a subband PMI which is common for a plurality of subbands, the above-stated subband CQI corresponding to the subband PMI refers to either a subband CQI of the same subband or a common subband CQI of the same plurality of subbands. The base station performs comparison of the subband CQI corresponding to the acquired subband PMI and the wideband CQI corresponding to the wideband PMI (at step 2220). As a result of this comparison, if the subband CQI corresponding to the subband PMI is better than the wideband CQI corresponding to the wideband PMI by a degree greater than or equal to a predefined coefficient c, the base station determines to obtain a plurality of subband PMIs by the aperiodic feedback scheme (at step 2230).

In Fig. 22, the subband PMI to be acquired by the aperiodic feedback scheme may be the one that is about each subband of the entire bandwidth or, alternatively, the one that relates to one part of subbands or, still alternatively, a subband PMI having the information of a desired precoding matrix that is shared by multiple subbands. When it is required for the base station to acquire more accurate information from the mobile station, subband PMIs in units of subbands in respective subbands with respect to respective subbands of the entire bandwidth and, in addition thereto, those subband CQIs corresponding to all of them may be obtained together by the aperiodic feedback scheme.

The PMI and CQI to be acquired by the base station in the first step of Fig. 22 may be the ones that are acquired by the periodic feedback scheme or, alternatively, those obtained by the aperiodic feedback scheme or, still alternatively, those obtained by both of these feedback schemes. In addition, the subband PMI and subband CQI to be acquired by the base station in the first step of Fig. 22 may be the ones that are about each subband of the entire bandwidth or, alternatively, the ones that relate to one of subbands or, still alternatively, a subband PMI and subband CQI having a common desired precoding information and/or index shared by multiple subbands. In case a plurality of subband PMI and subband CQI pairs are obtained, in the process of Fig. 22 for comparing the subband CQI corresponding to the subband PMI with the wideband CQI corresponding to the wideband PMI, if a subband CQI corresponding to one part subband PMI is better than the wideband CQI corresponding to the wideband PMI by a degree greater than or equal to the coefficient c, for example, then a decision may be made to acquire a plurality of subband PMIs by the aperiodic feedback scheme. Alternatively, if those subband CQIs corresponding to all the subband PMIs are better than the wideband CQI corresponding to the wideband PMI by a degree greater than or equal to the coefficient c, a decision may be made to obtain multiple subband PMIs by the aperiodic feedback scheme.

### (Example 10)

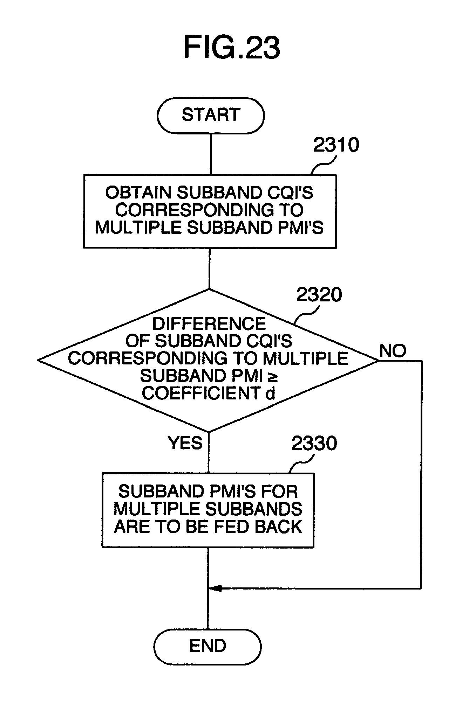

A tenth example using the illustrative embodiment will be described with reference to Fig. 23. In the tenth example, when a difference between subband CQIs corresponding to subband PMIs is greater than or equal to a prespecified level, the base station 101 causes the mobile station 102 to feed back a plurality of subband PMIs aperiodically.

Fig. 23 is a flow diagram showing one example of the procedure in the base station 101 for determining, based on a difference between two or more subband CQIs corresponding to subband PMIs, whether a plurality of subband PMIs are to be acquired from the mobile station by the aperiodic feedback scheme. In Fig. 23, the base station acquires from the mobile station a plurality of subband PMIs and multiple subband CQIs corresponding to these subband PMIs (at step 2310). Note here that in the case of using either a subband PMI of certain subband or a subband PMI shared by a plurality of subbands, the above-stated subband CQI corresponding to the subband PMI refers to either a subband CQI with respect to the same subband or a common subband CQI of a combination of the same plurality of subbands. The base station calculates a difference between subband CQIs corresponding to the plurality of subband PMIs thus obtained (at step 2320). When a result of the calculation indicates that the subband CQI corresponding to a certain subband PMI is better than the subband CQI corresponding to another subband PMI by a degree greater than or equal to a predefined coefficient *d* (i.e., if YES at step 2320), the base station decides to obtain multiple subband PMIs by the aperiodic feedback scheme (at step 2330).

In Fig. 23, the subband PMI to be acquired by the aperiodic feedback scheme may be the one that is about each subband of the entire bandwidth or, alternatively, the one that relates to one part of subbands or, still alternatively, a subband PMI having preferred precoding information that is common for a plurality of subbands. When the base station wants to acquire more accurate information from the mobile station, subband PMIs in units of subbands in regard to respective subbands of the entire bandwidth and, in addition thereto, those subband CQIs corresponding thereto may be obtained together by the aperiodic feedback scheme.

The PMI and CQI to be acquired by the base station in the first step of Fig. 23 may be the ones that are acquired by the periodic feedback scheme or, alternatively, those obtained by the aperiodic feedback scheme or, still alternatively, those obtained by both of these feedback schemes. In addition, the subband PMI and subband CQI to be acquired by the base station in the first step of Fig. 23 may be the ones that are about each subband of the entire bandwidth or, alternatively, the ones that relate to one of subbands or, still alternatively, a subband PMI and subband CQI having an index and preferred precoding information shared by multiple subbands. Note however that due to the need for acquisition of multiple subband CQIs corresponding to subband PMIs, it is desirable to obtain subband CQIs corresponding to subband PMIs in units of subbands with respect to multiple subbands. In cases where three or more subband CQIs corresponding to subband PMIs are obtained, one recommendable way in the process of Fig. 23 for comparing the subband CQIs corresponding to multiple subband PMIs is to determine acquisition of multiple subband PMIs by the aperiodic feedback scheme if a difference between subband CQIs of any two of the subband PMIs is greater than or equal to the coefficient *d*, for example. An alternative approach is to determine the acquisition of multiple subband PMIs by the aperiodic feedback scheme if a difference between the best subband CQI and the worst subband CQI is greater than or equal to the coefficient d in the process of comparing each subband PMI-corresponding subband CQI.

### (Example 11)

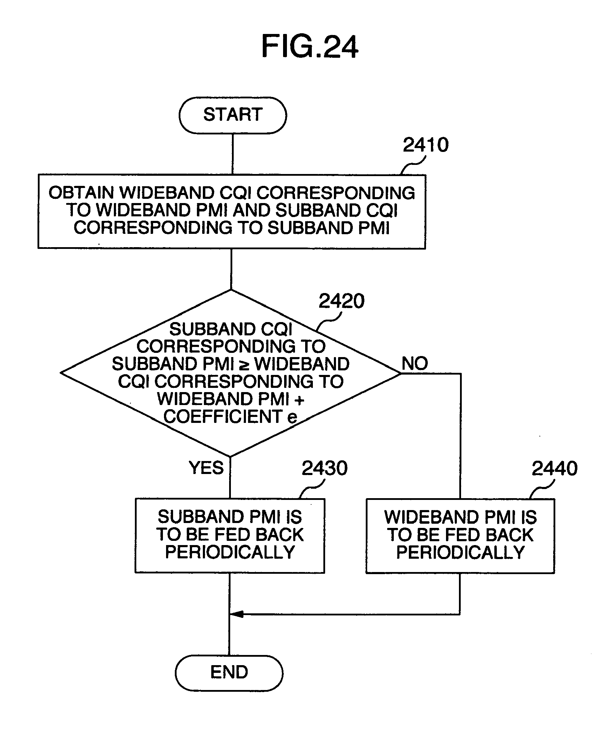

An eleventh example using the illustrative embodiment will be described with reference to Fig. 24. In the eleventh example, in cases where a subband CQI corresponding to subband PMI is better than a wideband CQI corresponding to wideband PMI by a degree greater than or equal to a predefined level, the base station 101 causes mobile station 102 to feed back the subband CQI periodically; in the other cases, the base station forces the mobile station not to perform such periodic feedback of the subband CQI.

Fig. 24 is a flow diagram showing one example of the procedure in the base station for determining which one of the wideband PMI and subband PMI is set as the PMI to be periodically fed back from the mobile station, based on a difference between the subband CQI corresponding to subband PMI and the wideband CQI corresponding to wideband PMI.

In Fig. 24, the base station acquires from the mobile station a wideband PMI and subband PMI together with a wideband CQI corresponding to the wideband PMI and a subband CQI corresponding to the subband PMI (at step 2410). Note here that the wideband CQI corresponding to the wideband PMI refers to a wideband CQI in the case of using a single wideband PMI covering the entire bandwidth. Also note that the subband CQI corresponding to the subband PMI denotes, in the case of using a subband PMI in a certain subband or in a combination of subbands, a subband CQI in the same subband or in the combination of these subbands. The base station performs comparison of the acquired subband CQI corresponding to the subband PMI and the wideband CQI corresponding to the wideband PMI (at step 2420). When a result of the comparison indicates that the subband CQI corresponding to the subband PMI is better than the wideband CQI corresponding to the wideband PMI by a degree greater than or equal to a predefined coefficient e (i.e., if YES at step 2420), the base station determines to acquire the subband PMI by the periodic feedback scheme (step 2430). In the other case (i.e., if NO at step 2420), the base station determines not to acquire the subband PMI by the periodic feedback scheme but to obtain the wideband PMI (2440). Note that in the case of the subband PMI being obtained by the periodic feedback scheme, the wideband PMI may be obtained by the periodic feedback scheme or, alternatively, may not be obtained thereby.

The PMI and CQI to be acquired by the base station in the first step of Fig. 24 may be the ones that are acquired by the periodic feedback scheme or, alternatively, those obtained by the aperiodic feedback scheme or, still alternatively, those obtained by both of these feedback schemes. In addition, the subband PMI and subband CQI to be acquired by the base station in the first step of Fig. 24 may be the ones that are about each subband of the entire bandwidth or, alternatively, the ones that relate to one of subbands or, still alternatively, a subband PMI and subband CQI having a common desired precoding information and/or index shared by multiple subbands. In case a plurality of subband PMI and subband CQI pairs are obtained, in the process of Fig. 24 for comparing the subband CQI corresponding to the subband PMI with the wideband CQI corresponding to the wideband PMI, if a subband CQI corresponding to one part subband PMI is better than the wideband CQI corresponding to the wideband PMI by a degree greater than or equal to the coefficient *e*, then a decision may be made to acquire the subband PMI by the periodic feedback scheme. Alternatively, if subband CQIs corresponding to all the subband PMIs are better than the wideband CQI corresponding to the wideband PMI by a degree greater than or equal to the coefficient *e*, a decision may be made to obtain the subband PMI by the periodic feedback scheme.

### (Example 12)

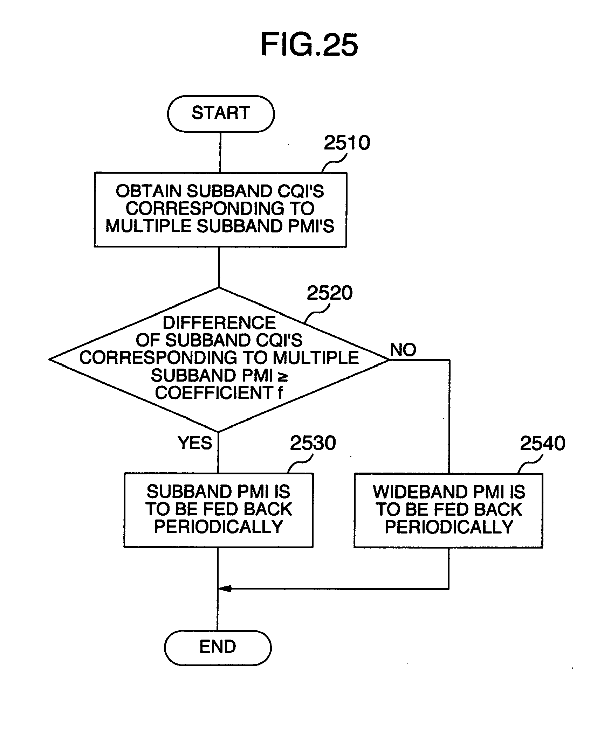

A twelfth example using the illustrative embodiment will be described with reference to Fig. 25. In the twelfth example, when a difference of a plurality of subband CQIs corresponding to the subband PMIs is greater than or equal to a prespecified level, the base station 101 causes mobile station 102 to feed back the subband PMI periodically; in other cases, the base station forces the mobile station not to perform such periodic subband PMI feedback.

Fig. 25 is a flow diagram showing one example of the procedure in the base station for determining, based on a difference between two or more subband CQIs corresponding to subband PMIs, which one of wideband PMI and subband PMI should be used as the PMI to be periodically fed back from the mobile station. In Fig. 25, the base station acquires from the mobile station a plurality of subband PMIs and multiple subband CQIs corresponding to these subband PMIs (at step 2510). Note here that the subband CQI corresponding to subband PMI is meant, in the case of using either a subband PMI of certain subband or a subband PMI shared by two or more subbands, by either a subband CQI relating to the same subband or a common subband CQI which is shared by a combination of the same subbands.

The base station calculates a difference between any two of the plurality of acquired subband CQIs corresponding to the subband PMIs (at step 2520). When a subband CQI corresponding to certain subband PMI is better than a subband CQI corresponding to another subband PMI by a degree greater than or equal to a predefined coefficient *f* (i.e., if YES at step 2520), the base station determines to acquire the subband PMI by the periodic feedback scheme (at step 2530). In the other case (i.e., if NO at step 2520), the base station determines to obtain the wideband PMI rather than the subband PMI by the periodic feedback scheme (step 2540). Note here that in the case of the subband PMI being obtained by the periodic feedback scheme, the wideband PMI may be obtained by the aperiodic feedback scheme or, alternatively, may not be obtained thereby.

The PMI and CQI to be acquired by the base station in the first step of Fig. 25 may be the ones that are acquired by the periodic feedback scheme or, alternatively, those obtained by the aperiodic feedback scheme or, still alternatively, those obtained by both of these feedback schemes. Also note that the subband PMI and subband CQI to be acquired by the base station in the first step of Fig. 25 may be the ones that concern each subband of the entire bandwidth or, alternatively, the ones that relate to one of subbands or, still alternatively, a subband PMI and subband CQI having a common preferred precoding information and/or index shared by multiple subbands. Note however that due to the need for acquisition of multiple subband CQIs corresponding to subband PMIs, it is desirable that subband CQIs corresponding to subband PMIs have been obtained in units of subbands with respect to multiple subbands. In cases where three or more subband CQIs corresponding to subband PMIs are obtained, one available way in the process of Fig. 25 for comparing the subband CQIs corresponding to multiple subband PMIs is to determine execution of the subband PMI acquisition using the periodic feedback scheme if a difference between those subband CQIs of any two of the subband PMIs is greater than or equal to the coefficient *f.* An alternative approach is to determine execution of the subband PMI acquisition by the periodic feedback scheme if a difference between the best subband CQI and the worst subband CQI is greater than or equal to the coefficient *f* when performing comparison of the subband CQI corresponding to each subband PMI.

The above-stated examples are not such that any one of them must be employed independently-two or more of them are employable together in combination. Hereafter, an explanation will be given of a case where a plurality of examples are combined together while taking the E-UTRA as an example.

In the E-UTRA, the periodic feedback scheme is defined to have several periodic feedback modes 1-0, 1-1, 2-0 and 2-1. Furthermore, the aperiodic feedback scheme is defined to have aperiodic feedback modes 1-2, 2-0, 2-2, 3-0 and 3-1.

In the periodic feedback modes 1-0 and 1-1, the wideband CQI is contained in feedback information. In the periodic feedback mode 1-1, wideband PMI is also contained in the feedback information in addition thereto. In the periodic feedback modes 2-0 and 2-1, wideband and subband CQIs are included in the feedback information. In the periodic feedback mode 2-1, wideband PMI is contained in the feedback information in addition thereto.

In the aperiodic feedback modes 2-0 and 2-2, wideband and subband CQIs are contained in the feedback information: in this case, the subband CQI is a single CQI that is representative of a group or "ensemble" of several subbands. In the aperiodic feedback mode 2-2, wideband and subband PMIs are contained in the feedback information in addition thereto, wherein the subband PMI in this case is a single PMI which is representative of several subbands. In the aperiodic feedback modes 3-0 and 3-1, wideband and subband CQIs are contained in the feedback information, wherein the subband CQI at this time is a per-subband CQI with respect to all available subbands. In the aperiodic feedback mode 3-1, wideband PMI is contained in the feedback information in addition thereto.

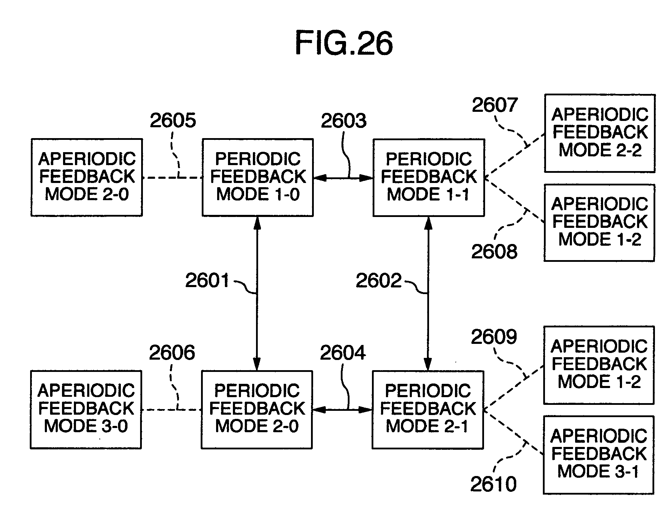

Fig. 26 shows, in regard to the feedback modes as defined in E-UTRA, a relationship of periodic feedback mode selection and aperiodic feedback mode request versus respective ones of the examples as previously stated in conjunction with Figs. 12 to 25. Either the first example shown in Fig. 12 or the second example of Fig. 13 is employed as the reference or "criterion" for execution of periodic feedback mode change at a transition indicated by dotted line 2601 in Fig. 26. As the reference for execution of periodic feedback mode change at a transition 2602, any one of the first example, the second example, the eleventh example and the twelfth example stated supra is applied. As the references for execution of periodic feedback mode changes at 2603 and 2604, the fifth and sixth examples are used. The third example is used at 2605 as the reference for determination as to whether aperiodic feedback in the aperiodic feedback mode 2-0 is transmitted or not. The fourth example is used at 2606 as the reference for judgment as to whether aperiodic feedback in the aperiodic feedback mode 3-0 is sent or not. Any one of the third, seventh and eighth examples is used at 2607 as the reference for judgment as to whether aperiodic feedback in the aperiodic feedback mode 2-2 is sent or not. At 2608, any one of the seventh, eighth and ninth examples is used as the reference for judgment as to whether aperiodic feedback in the aperiodic feedback mode 1-2 is sent or not. At 2609, either the seventh example or the eighth example is used as the reference for judgment as to whether aperiodic feedback in the aperiodic feedback mode 1-2 is sent or not. At 2610, the fourth example is used as the reference for judgment as to whether aperiodic feedback in the aperiodic feedback mode 3-1 is sent or not.

According to the above-stated embodiments incorporating the principles of this invention, it is possible to perform feedback of the scheduling information on an as-needed basis while simultaneously preventing deterioration of throughputs otherwise occurring due to an increase in overhead. This makes it possible to improve the use efficiency of radiocommunication resources.

It should be further understood by those skilled in the art that although the foregoing description has been made on embodiments of the invention, the invention is not limited thereto and various changes and modification may be made without departing from the spirit of the invention and the scope of the appended claims.

## Claims

1. A communication system comprising:
a mobile station (102); and
a base station (101) for communication with the mobile station (102) by use of a frequency band of a radio channel having a plurality of subbands, wherein
said base station (101) determines a kind of feedback information which is a to-be-collected index of the radio channel and presence or absence of a transmission cycle,
in regard to periodical collection of feedback information, previously notifies the mobile station (102) of a transmission form of feedback information and a transmission cycle of the feedback information,
receives feedback information from the mobile station (102) at a timing pursuant to the transmission cycle,
as for aperiodic collection of feedback information, requests aperiodic transmission of feedback information from the base station (101) to the mobile station (102), receives such aperiodic feedback information from the mobile station (102),
based on the aperiodic feedback information, decides whether transmission of the feedback information from said mobile station (102) by the periodic transmission is to be stopped or not, and
when a decision result indicates that the transmission is stopped, sends a stop-instructing notice to said mobile station (102).

2. The communication system according to claim 1, wherein said base station (101) decides based on the aperiodic feedback information whether the kind of periodically transmitted feedback information is changed or not and, when changing it, notifies a change to said mobile station (102).

3. The communication system according to claim 2, wherein said base station (101) selects, based on a comparison result of an index of radio channel quality in a subband and an index of radio channel quality in an entire band, any one of indexes of radio channel quality in subband and radio channel quality including a plurality of subbands, in terms of the kind of the periodically collected feedback information.

4. The communication system according to claim 3, wherein said base station (101) acquires the radio channel quality in a plurality of subbands in accordance with aperiodic collection, performs comparison of radio channel quality in the plurality of subbands, instructs, when a difference thereof is greater than or equal to a prespecified difference, said mobile station (102) to periodically feed back the index of radio channel quality in a subband and, if not so, instructs said mobile station (102) to periodically feed back the index of radio channel quality in the entire band.

5. The communication system according to claim 1, wherein in a case where an index of radio channel quality in an entire band is being collected by periodical feedback information collection, said base station (101) aperiodically sends to said mobile station (102) a request for acquisition of an index of radio channel quality in a subband.

6. The communication system according to claim 1, wherein in a case where an index of radio channel quality in a subband is being collected by periodic feedback information collection, said base station (101) aperiodically sends to said mobile station (102) a request for acquisition of an index of radio channel quality in an entire band.

7. The communication system according to claim 1, wherein said base station (101) decides a mobile station moving speed by a time variation of an index of radio channel quality to be acquired, causes, when a decision result indicates that the mobile station moving speed is less than a fixed level, the mobile station (102) to periodically feed back its selected precoding information, and, if not so, instructs said mobile station (102) to stop periodical feedback of its selected precoding information.

8. The communication system according to claim 1, wherein when causing said mobile station (102) to periodically feed back its selected precoding information in an entire band, said base station (101) notifies said mobile station (102) of a request for acquisition of its selected precoding information in one or a plurality of subbands.

9. The communication system according to claim 1, wherein when said mobile station (102) aperiodically feeds back its selected precoding information in reply to an acquisition request from said base station (101), said mobile station (102) sends the precoding information to said base station (101) along with an index of radio channel quality in a part of subband corresponding to said precoding information.

10. The communication system according to claim 1, wherein when causing said mobile station (102) to periodically feed back an index of radio channel quality in a subband, said base station (101) aperiodically notifies said mobile station (102) of a request for acquisition of an index of radio channel quality in a plurality of subbands.

11. A wireless communication method for causing a base station (101) to collect from a plurality of mobile stations (102) feedback information to be fed back for use in communication with said mobile stations (102), said method comprising the steps of:
determining feedback information to be collected;
when collecting first feedback information at predetermined time intervals, previously notifying a mobile station (102) of a transmission cycle of the first feedback information;
deciding whether a request for transmission of second feedback information is to be sent or not;
sending the transmission request based a decision result;
receiving the second feedback information from said mobile station (102) in responding to receipt of the transmission request;
deciding whether feedback information to be collected is switched or not based on at least either one of the first feedback information and the second feedback information; and
based on the decision result, notifying said mobile station (102) of control information concerning the feedback information to be collected.

12. The wireless communication method according to claim 11, wherein the step of notifying said mobile station (102) of control information includes:
sending a transmission cycle of transmission of feedback information from the mobile station (102) to the base station (101) and a kind of the feedback information.

13. A first station (101) communicable with a second station (102), comprising:
a radio transmitter/receiver unit (202) operative to control information to be sent to and received from the second station (102) via a transmission channel;
a memory (224) storing information as to a first collection mode with a transmission cycle and a kind of transmission information being correlated with each other and a second collection mode with the kind of transmission information being correlated thereto; and
a feedback information controller (270) operative to send an information acquisition request to the second station (102) in accordance with the second collection mode, selects, when information corresponding to the acquisition request is acquired from the second station, the first collection mode based on the information corresponding to the acquisition request, and notifies, via the radio transmitter/receiver unit (202), the second station (102) of both a transmission cycle correlated with the selected collection mode and a kind of information to be transmitted.

14. The first station according to claim 13, wherein said feedback information controller (270) decides based on the information corresponding to the acquisition request whether feedback information collection by the first collection mode is to be stopped or not, and, when a decision result indicates that it is stopped, sends via said radio transmitter/receiver unit (202) to the second station (102) an instruction for stopping an information transmission operation thereof in accordance with the first collection mode.
